# EUROPÄISCHE PATENTSCHRIFT

(11) **EP 1 221 210 B1**
(45) Veröffentlichungstag und Bekanntmachung des Hinweises auf die Patenterteilung: **11.05.2005**
(21) Anmeldenummer: 00982986.2
(22) Anmeldetag: 11.10.2000
(51) Int. Cl.: H04B 7/005, H04B 7/26

(54) **VERFAHREN ZUR SIGNALISIERUNG EINER ZUTEILUNG VON SPREIZKODES IN EINEM FUNK-KOMMUNIKATIONSSYSTEM**
METHOD FOR INDICATING AN ALLOCATION OF SPREAD CODES IN A RADIO COMMUNICATION SYSTEM
PROCEDE POUR LA SIGNALISATION D'UNE AFFECTATION DE CODES D'ETALEMENT DANS UN SYSTEME DE COMMUNICATION RADIO

(30) Priorität: 12.10.1999 DE 19949153; 22.05.2000 DE 10025286
(43) Veröffentlichungstag der Anmeldung: 10.07.2002
(73) Patentinhaber: SIEMENS AKTIENGESELLSCHAFT, 80333 München (DE)
(72) Erfinder: GUSTRAU, Jörg, 10625 Berlin (DE); PURAT, Marcus, 12209 Berlin (DE); ULRICH, Thomas, 13505 Berlin (DE); HOEYNCK, Andreas, 13156 Berlin (DE); SOMMER, Volker, 13503 Berlin (DE)
(86) Internationale Anmeldenummer: PCT/DE2000/003579
(87) Internationale Veröffentlichungsnummer: WO 2001/028104

(56) Entgegenhaltungen:
- EP-A- 0 674 451
- EP-A- 0 949 768
- WO-A-00/10301
- GB-A- 2 351 422
- MAYER J ET AL: "Protocol and Signalling Aspects of Joint Detection CDMA" IEEE INTERNATIONAL SYMPOSIUM ON PERSONAL, INDOOR AND MOBILE RADIO COMMUNICATIONS,XX,XX, Bd. 3, Nr. 3, 1. September 1997 (1997-09-01), Seiten 867-871, XP002100519

## Beschreibung

Die Erfindung betrifft ein Verfahren zur Signalisierung von teilnehmerspezifischen Informationen, z.B. einer Zuteilung von Spreizkodes in einem Funk-Kommunikationssystem, insbesondere in einem Funk-Kommunikationssystem mit einem CDMA-Teilnehmerseparierungsverfahren. Die Erfindung ist insbesondere für einen Einsatz in einem Mobilfunk- oder drahtlosen Teilnehmeranschlußsystem geeignet.

In Funk-Kommunikationssystemen, beispielsweise dem europäischen Mobilfunksystem der zweiten Generation GSM (Global System for Mobile Communications), werden Informationen (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in einem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen. Für die dritte Mobilfunkgeneration sind zwei Modi vorgesehen, wobei ein Modus einen FDD-Betrieb (frequency division duplex) und der andere Modus einen TDD-Betrieb (time division duplex) bezeichnet. Diese Modi finden in jeweils unterschiedlichen Frequenzbändern ihre Anwendung. Beide Modi unterstützen ein sogenann-Die abgestrahlten elektromagnetischen Wellen werden aufgrund von Verlusten durch Reflexion, Beugung und dergleichen gedämpft. Infolgedessen sinkt die Empfangsleistung, die bei der empfangenden Teilnehmerstation zur Verfügung steht. Diese Dämpfung ist ortsabhängig und bei sich bewegenden Teilnehmerstationen auch zeitabhängig. Bei einer Mehrwegeausbreitung kommen mehrere Signalkomponenten unterschiedlich verzögert bei der empfangenden Funkstation an. Die geschilderten Einflüsse beschreiben den verbindungsindividuellen Übertragungskanal.

Aus EP-A-0 674 451 ist ein Verfahren zur Datenübertragung bekannt, bei dem zur Kanalschätzung einem Übertragungssignal eine variierende Anzahl von Referenzinformationen in Abhängigkeit von Funkkanalparametern hinzugefügt wird.

Aus DE 197 34 936 ist bekannt, wie eine Kanalschätzung basierend auf der Auswertung übertragener und im Empfänger vorbekannter Kanalmeßsequenzen die Eigenschaften des verbindungsindividuellen Übertragungskanals bestimmt. Dies geschieht durch einen Vergleich der vorbekannten gespeicherten Kanalmeßsequenz und der empfangenen, durch den Übertragungskanal verzerrten Kanalmeßsequenz. Das Ergebnis der Kanalschätzung ist eine Kanalimpulsantwort.

Aus dem Artikel von J. Mayer, J. Schlee, T. Weber "Protocol and Signalling Aspects of Joint Detection CDMA", PIMRC'97, Helsinki, 1997, Seiten 867-871, ist unter anderem bekannt, daß in einer Funkstation empfangsseitig zur Detektion von Signalen einer Kommunikationsverbindung nicht nur ein der eigenen Kommunikationsverbindung zugeteilter Spreizkode, sondern zusätzlich parallelen Kommunikationsverbindungen zugeteilte Spreizkodes verwendet werden. Hierbei ist die empfangende Funkstation vorteilhaft in Kenntnis der aktuell zugewiesenen Spreizkodes, um eine Verschlechterung der Empfangsqualität aufgrund einer Detektion von aktuell nicht vorhandenen Signalen bzw. nicht zugeteilten Spreizkodes zu vermeiden. qualität aufgrund einer Detektion von aktuell nicht vorhandenen Signalen bzw. nicht zugeteilten Spreizkodes zu vermeiden.

Die Diskussionsgrundlage 3GPP TSG-RAN Working Group 1, Meeting #12, Seoul, Korea, April 08 - April 13, 2000 beschreibt ein Verfahren zur Signalisierung einer Anzahl aktiver Spreizcodes durch Zuordnung jeweils mehrerer Werte der Anzahl aktiver Spreizcodes zu einer Kombination von Kanalmeßsequenzen.

Der Erfindung liegt die Aufgabe zugrunde, ein Verfahren anzugeben, das eine einfache Signalisierung teilnehmerspezifischer Informationen ermöglicht.

Diese Aufgabe wird durch das Verfahren mit den Merkmalen des Anspruchs 1 und durch die Basisstation des Anspruchs 11 zur Durchführung des Verfahrens gelöst. Vorteilhafte Weiterbildungen der Erfindung sind den Unteransprüchen zu entnehmen.

Gemäß der vorliegenden Erfindung werden in einem Funk-Kommunikationssystem, das ein CDMA-Teilnehmerseparierungsverfahren unterstützt, von einer Sendestation teilnehmerspezifische Informationen kodiert durch eine Auswahl und/oder Anzahl von Kanalmeßseqenzen zu einer Empfangsstation signalisiert.

Durch das erfindungsgemäße Verfahren, welches Kombinationen von Kanalmesssequenzen zur Signalisierung verwendet, können von einer Sendestation, beispielsweise einer Basisstation, Informationen an Sendestationen, z.B. Teilnehmerstationen, übertragen werden, ohne dass hierfür zusätzliche Datenbits auf spezifischen Signalisierungskanälen erforderlich wären.

Erfindungsgemäß wird in einem Funk-Kommunikationssystem, das ein CDMA-Teilnehmerseparierungsverfahren unterstützt, von einer Basisstation eine aktuelle Anzahl von in einer Funkzelle der Basisstation zugeteilter Spreizkodes kodiert durch eine Auswahl und/oder Anzahl von Kanalmeßsequenzen zu einer Teilnehmerstation signalisiert.

Die erfindungsgemäße Ausgestaltung ermöglicht in einfacher Weise eine Signalisierung zu der Teilnehmerstation, wieviele Spreizkodes aktuell zugeteilt sind. Da die Signalisierung mittels einer Auswahl und/oder Anzahl der zur Verfügung stehenden Kanalmeßsequenzen erfolgt, sind keine zusätzlichen Signalisierungen auf spezifischen Signalisierungskanälen oder Anpassungen bzw. Veränderungen an den Kanalmeßsequenzen erforderlich. Mittels der ihr per se bekannten möglichen Kanalmeßsequenzen kann die Teilnehmerstation die von der Basisstation aktuell gesendeten Kanalmeßsequenzen und durch deren erfindungsgemäße jeweilige Anzahl bzw. Kombination implizierte Kodierung die aktuelle Anzahl zugeteilter Spreizkodes ermittein, um nachfolgend eine optimale Detektion durchzuführen.

Nach einer vorteilhaften Weiterbildung der Erfindung weisen die teilnehmerspezifischen Informationen, wie z.B. die Anzahl der in einer Funkzelle der Basisstation zugeteilten Spreizcodes, verschiedene Werte auf und es sind jeweils einer Auswahl und/oder Anzahl von Kanalmeßsequenzen ein oder mehrere Werte der teilnehmerspezifischen Informationen zugeordnet und werden zu der Teilnehmerstation signalisiert. Auf diese Weise kann auch bei einer nicht ausreichenden Anzahl von Kanalmeßsequenzen eine Signalisierung erfolgen, die z.B. die mögliche Anzahl der aktiven Spreizcodes wesentlich einschränkt. Die Zuordnung kann auch dahingehend erfolgen, dass die Differenz der Werte der zugeordneten teilnehmerspezifischen Informationen maximal und/oder konstant ist, so dass Detektionsfehler weniger wahrscheinlich sind.

Nach einer vorteilhaften Weiterbildung der Erfindung wird die Menge der Kanalmeßsequenzen durch eine zyklische Ableitung von einer oder mehreren Grundsequenzen gebildet. Hierdurch wird unter anderem eine gleichzeitige gemeinsame Kanalschätzung für mehrere Übertragungskanäle möglich, wenn deren Kanalmeßsequenzen von der gleichen Grundsequenz abgeleitet wurden.

Das erfindungsgemäße Verfahren wird gemäß einer weiteren Weiterbildung der Erfindung besonders vorteilhaft in Funk-Kommunikationssystemen mit einem beschriebenen Joint-Detection-Verfahren durchgeführt.

Einer weiteren Weiterbildung der Erfindung zufolge wird die Anzahl Kanalmeßsequenzen zur Signalisierung der Anzahl zugeteilter Spreizkodes minimiert. Die Anzahl der verwendeten Kanalmeßsequenzen wird dabei vorteilhaft nach der maximalen Anzahl zuteilbarer Spreizkodes gewählt. So lassen sich beispielsweise durch Kombinationen von vier Kanalmeßsequenzen fünfzehn unterschiedliche Mengen von zugeteilten Spreizkodes definieren.

Besonders vorteilhaft wird das beschriebene erfindungsgemäße Verfahren in einem als ein Mobilfunksystem oder drahtlosen Teilnehmeranschlußsystem verwirklichten Funk-Kommunikationssystem eingesetzt.

Ausführungsbeispiele der Erfindung werden anhand der beiliegenden Zeichnungen näher erläutert.

Dabei zeigen
- FIG 1: ein Blockschaltbild eines Funk-Kommunikationssystems,
- FIG 2: eine schematische Darstellung der Rahmenstruktur einer Funkschnittstelle mit einem TD/CDMA-Teilnehmerseparierungsverfahren, und
- FIG 3: eine Tabelle mit einer durch Auswahl und Kombinationen von Trainingssequenzen jeweils kodierte Anzahl zugeteilter Spreizkodes.

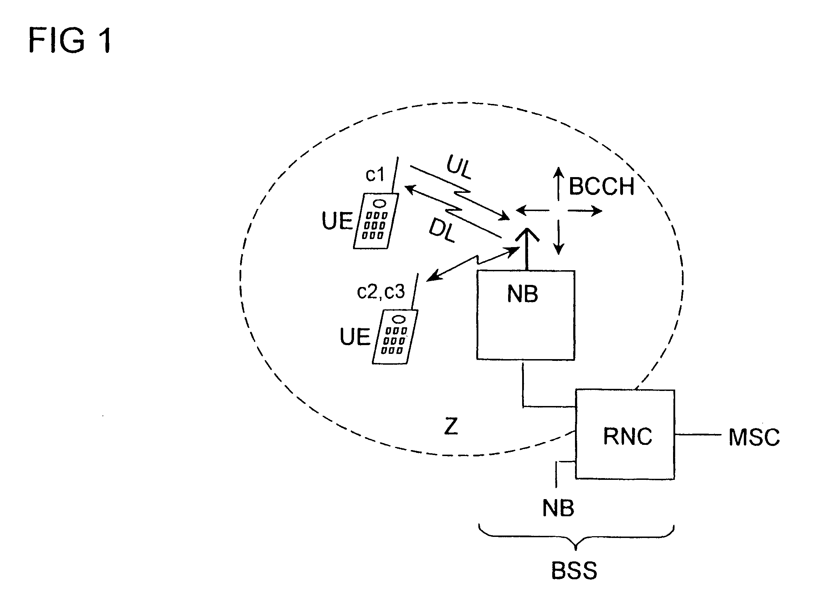

Die FIG 1 zeigt einen Teil eines Mobilfunksystems als Beispiel für die Struktur eines Funk-Kommunikationssystems. Ein Mobilfunksystem besteht jeweils aus einer Vielzahl von Mobilvermittlungsstellen MSC, die zu einem Vermittlungsnetz (SSS - Switching Subsystem) gehören und untereinander vernetzt sind bzw. den Zugang zu einem Festnetz herstellen, und aus jeweils einem oder mehreren mit diesen Mobilvermittiungsstellen MSC verbundenen Basisstationssystemen BSS (BSS - Base Station Subsystem). Ein Basisstationssystem BSS weist wiederum zumindest eine Einrichtung RNC (RNC - Radio Network Controller) zum Zuweisen von funktechnischen Ressourcen sowie zumindest eine jeweils damit verbundene Basisstation NB (NB - Node B) auf.

Eine Basisstation NB kann über eine Funkschnittstelle Verbindungen zu Teilnehmerstationen UE (UE - User Equipment) aufbauen. Durch jede Basisstation NB wird zumindest eine Funkzelle Z gebildet. Die Größe der Funkzelle Z wird in der Regel durch die Reichweite eines Organisationskanals (BCCH - Broadcast Control Channel), der von den Basisstationen NB mit einer jeweils maximalen und konstanten Sendeleistung gesendet wird, bestimmt. Bei einer Sektorisierung oder bei hierarchischen Zellstrukturen können pro Basisstation NB auch mehrere Funkzellen Z versorgt werden. Die Funktionalität dieser Struktur ist auf andere Funk-Kommunikationssysteme übertragbar, in denen die Erfindung zum Einsatz kommen kann.

Das Beispiel der FIG 1 zeigt zwei Teilnehmerstationen UE, die sich in der Funkzelle Z der Basisstation NB befinden. Die Mobilstationen UE haben jeweils eine Kommunikationsverbindung zu der Basisstation NB aufgebaut, auf der in Aufwärts- UL und Abwärtsrichtung DL eine Signalübertragung eines gewählten Dienstes erfolgt. Die Kommunikationsverbindungen werden durch den Teilnehmerstationen UE zugeteilte unterschiedliche Spreizkodes c1, c2, c3 separiert, wobei die Teilnehmerstationen UE jeweils alle aktuell zugeteilten Spreizkodes c1, c2, c3 für den Empfang der Signale der eigenen Kommunikationsverbindung gemäß dem beschriebenen Joint-Detection-Verfahren nutzen. Während der Verbindung werten die Teilnehmerstationen UE und die Basisstation NB weiterhin periodisch Übertragungseigenschaften der Funkschnittstelle per Kanalschätzung nach DE 197 34 936 aus.

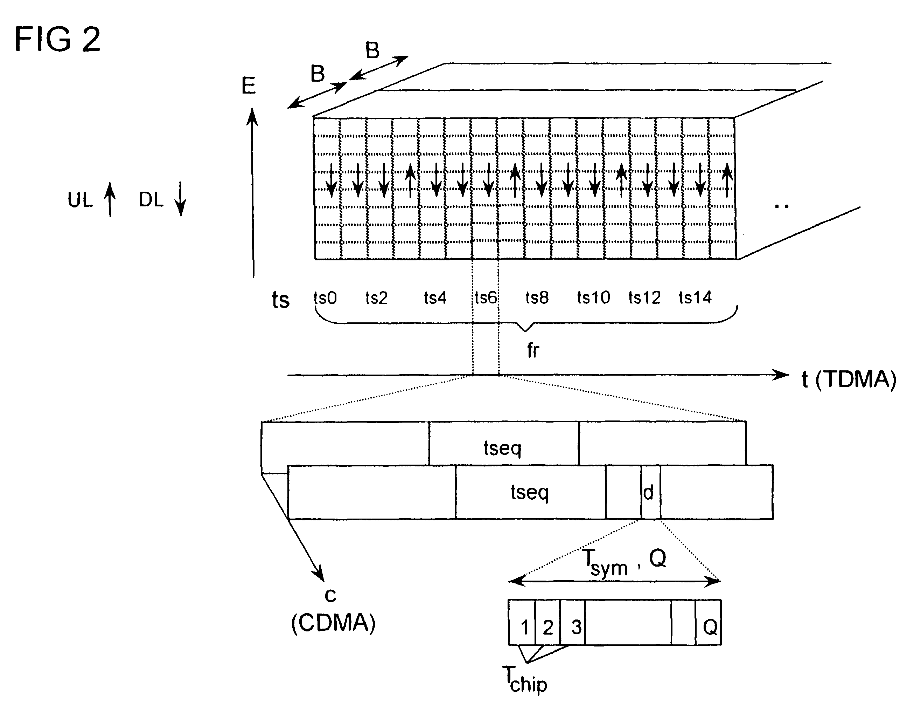

Die Rahmenstruktur der Funkübertragung im TDD-Modus des UMTS-Mobilfunksystems, in der das erfindungsgemäße Verfahren vorteilhaft einsetzbar ist, ist aus der FIG 2 ersichtlich. Gemäß einer TDMA-Komponente ist eine Aufteilung eines breitbandigen Frequenzbereiches in mehrere Zeitschlitze ts gleicher Zeitdauer, beispielsweise 15 Zeitschlitze ts0 bis ts14 vorgesehen, die einen Zeitrahmen fr bilden. Ein Zeitschlitz ts ist für einen Kanal RACH mit wahlfreien Vielfachzugriff zugeteilt.

Ein Frequenzband B erstreckt sich über einen bestimmten Frequenzbereich. Ein Teil der Zeitschlitze wird für die SignalÜbertragung in Abwärtsrichtung DL und ein Teil der Zeitschlitze in Aufwärtsrichtung UL genutzt. Beispielhaft ist ein Asymmetrieverhältnis von 3:1 zugunsten der Abwärtsrichtung DL gezeigt. Bei diesem TDD-Übertragungsverfahren entspricht das Frequenzband B für die Aufwärtsrichtung UL dem Frequenzband B für die Abwärtsrichtung DL. Gleiches wiederholt sich für weitere Trägerfrequenzen. Durch die variable Zuordnung der Zeitschlitze ts für Auf- oder Abwärtsrichtung UL, DL können vielfältige asymmetrische Ressourcenzuteilungen vorgenommen werden.

Innerhalb der Zeitschlitze ts werden Informationen mehrerer Verbindungen in Funkblöcken übertragen. Die Daten d sind verbindungsindividuell mit einer Feinstruktur, einem Spreizkode c, gespreizt, so daß empfangsseitig beispielsweise n Verbindungen durch diese CDMA-Komponente (code division multiple access) separierbar sind. Die Spreizung von einzelnen Symbolen der Daten d bewirkt, daß innerhalb der Symboldauer T_{sym} Q Chips der Dauer T_{chip} übertragen werden. Die Q Chips bilden dabei den verbindungsindividuellen Spreizkode c. In den Funkblöcken ist weiterhin eine Kanalmeßsequenz tseq angeordnet, der wie beschrieben einer Kanalschätzung dient.

Die verwendeten Parameter der Funkschnittstelle für beide Übertragungsmodi sind vorteilhafterweise:

| | |
|---|---|
| Chiprate | 3,84 Mcps |
| Rahmendauer | 10 ms |
| Anzahl Zeitschlitze | 15 |
| Dauer eines Zeitschlitzes | 666 µs |
| Spreizfaktor | variabel |
| Modulationsart | QPSK |
| Bandbreite | 5 MHz |
| Frequenzwiederholungswert | 1 |

Diese Parameter ermöglichen eine bestmögliche Harmonisierung für TDD- und des FDD-Modus (FDD frequency division duplex) für die 3. Mobilfunkgeneration.

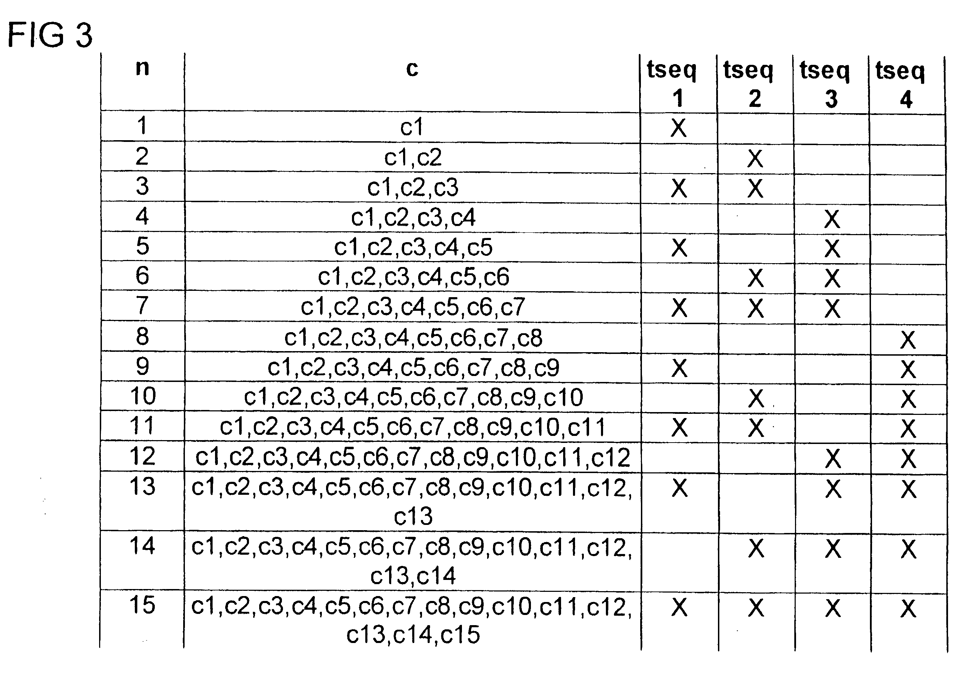

In der FIG 3 ist eine Tabelle dargestellt, die beispielhaft die erfindungsgemäße Signalisierung der aktuellen Anzahl n zugeteilter Spreizkodes c mittels einer Auswahl und/oder Anzahl von Kanalmeßsequenzen tseq offenbart. Bei einer Verwendung von vier Kanalmeßsequenzen tseq1...tseq4 sind 15 unterschiedlichen Mengen von zugeteilten Spreizkodes c darstellbar. In dem angegebenen Beispiel stehen 15 Spreizkodes c1...c15 zur Verfügung, wobei die Zuteilung der Spreizkodes c zu Kommunikationsverbindungen sukzessiv durchgeführt wird. In der Art einer binären Kodierung werden zur Darstellung einer bestimmten Anzahl n aktuell zugeteilter Spreizkodes c verschiedene Kanalmeßsequenzen tseq und Kombinationen mehrerer Kanalmeßsequenzen tseq verwendet. Nach dem in der FIG 1 dargestellten Beispiel wird nach der Tabelle der FIG 3 von der Basisstation NB die erste tseq1 und die zweite Kanalmeßsequenz tseq2 gesendet, da diese Kombination die aktuelle Zuteilung der Spreizkodes c1, c2 und c3 in der Funkzelle Z der Basisstation NB reprasentiert. Die Teilnehmerstationen UE werten permanent die aktuell gesendeten Kanalmeßsequenzen tseq aus, da sie per se in Kenntnis der Anzahl und den Inhalt der Kanalmeßsequenzen tseq sind. Sie können hierdurch in einfacher Weise detektieren, welche Kanalmeßsequenzen tseq aktuell von der Basisstation NB gesendet werden und hieraus wie beschrieben Rückschlüsse auf die aktuelle Anzahl zugeteilter Spreizkodes c ziehen. Die Parameter der Anzahl möglicher Kanalmeßsequenzen und deren Inhalt können von Funkzelle zu Funkzelle des Funk-Kommunikationssystems unterschiedlich sein und werden in der Regel den Teilnehmerstationen signalisiert.

Neben der bereits beschriebenen Signalisierung der aktuellen Anzahl n zugeteilter Spreizkodes c können auch beliebige andere teilnehmerspezifische Informationen durch eine Kombination verschiedener Kanalmeßsequenzen tseq der Teilnehmerstation UE signalisiert werden. Es lässt sich beispielsweise den verschiedenen Teilnehmerstationen UE jeweils eine individuelle Teilnehmeridentifikation TI zuordnen, welche aus einer Kombination verschiedener Kanalmeßsequenzen tseq gebildet wird. Zur effizienten paketorientierten Datenübertragung in Mobilfunknetzen können beispielsweise sogenannte "shared channels" eingesetzt werden. Verschiedenen Teilnehmerstationon UR werden diese Kanäle je nach Bedarf zugeteilt. Diese sich standig verändernde Zuteilung muß möglichst schnell erfolgen (d.h. am besten in der physikalischen Schicht), damit eine effiziente Ressourcenauslastung gegeben ist.

Unterschiedliche Teilnehmerstationen UE bekommen bei der Konfiguration des "shared channels" unterschiedliche Kombinationen von Kanalmeßsequenzen tseq als individuelle Teilnehmeridentifikation TI zugeordnet (über Signalisierungsmethoden in höheren Schichten). Im Betrieb des "shared channels" wird dann jeweils die Kombination von Kanalmeßsequenzen tseq, d.h. die individuelle Teilnehmeridentifikation TI ausgesendet, die der Teilnehmerstation UE zugeordnet ist, für den im Moment Daten gesendet werden.

Die Kombination von Kanalmeßsequenzen tseq kann der Teilnehmerstation UE beispielsweise über eine einfache Binärcodierung zugeordnet werden. Zur Erhöhung der Zuverlässigkeit kann jedoch auch ein beliebiger redundanter Code eines Kanalcodierungsverfahrens (z.B. BCH-Code) eingesetzt werden. Dadurch läßt sich bei vorgegebener Maximalanzahl von Kanalmeßsequenzen tseq die Anzahl der identifizierbaren Teilnehmerstationen UE erhöhen. Im UTRA-TDD System sind beispielsweise 8 Kanalmeßsequenzen tseq vorgesehen. Durch Kombination der Kanalmeßsequenzen tseq und einen einfachen binären Code können 127 Teilnehmerstationen UE identifiziert werden.

Die Kodierung von teilnehmerspezifischen Informationen mittels Kombinationen von Kanalmeßsequenzen tseq kann auch dazu verwendet werden, die Leistung eines Senders, im Uplink z.B. der Teilnehmerstation UE, mittels eines Empfängers, beispielsweise der Basisstation NB, zu regeln (Power-Control-Loop). Auch im Downlink ist eine derartige Signalisierung denkbar.

Hierzu steuert der Empfänger, z.B. die Basisstation NB, die Sendeleistung durch die Übertragung eines Signalisierungsbits (TPC, transmit power control) in der physikalischen Schicht. Der Sender, z.B. die Teilnehmerstation UE, ändert seine Sendeleistung in Abhängigkeit des TPC-Bits (0 beziehungsweise 1) um eine vorgegebene Schrittweite ?P nach oben oder nach unten. Die Kombination der Kanalmeßsequenzen tseq kann verschiedenen Schrittweiten ΔP der Sendeleistungsänderung zugeordnet werden. Die optimale Schrittweite ΔP hδngt dabei von veränderlichen Größen wie beispielsweise den Kanaleigenschaften, der Geschwindigkeit des Empfängers oder auch der Übertragungsrate des TPC-Bits ab. Eine schnelle Änderung der Schrittweite ΔP ist daher wönschenswert.

Die Zuordnung kann folgendermaßen ausgestaltet sein (bei Verwendung zweier Kanalmesssequenzen tseq1, tseq2):

| **Schrittweite (in dB)** | **tseq 1** | **tseq 2** |
|---|---|---|
| 1 | X | |
| 2 | | X |
| 3 | X | X |

Es ist auch denkbar, dass die Anzahl der zu signalisierenden Werte, z.B. die Anzahl der verwendeten CDMA-Codes, höher ist als die Anzahl der möglichen Kombinationen von Kanalmesssequenzen tseq, weil z.B. nicht genügend Kanalmesssequenzen tseq zur Verfügung stehen. In diesem Fall können einer Kombination von Kanalmesssequenzen tseq mehrere in Frage kommende Anzahlen von CDMA-Codes zugeordnet werden. Die Teilnehmerstation UE muß danach in einem weiteren Schritt die Anzahl der tatsächlich aktiven CDMA-Codes ermitteln. Dies geschieht beispielsweise durch Korrelation mit sämtlichen Codesequenzen und anschließender Schwellwertentscheidung.

Jedoch kann es aufgrund von additivem Rauschen und Kreuzkorrelationen zu Fehldetektionen kommen, d.h. es wird eine unrichtige Anzahl aktiver CDMA-Codes bestimmt. Um die Zahl der Fehlentscheidungen möglichst gering zu halten, wird erfindungsgemäß das Zuordnungsschema der Kombinationen der Kanalmesssequenzen tseq zu der Anzahl der verwendeten CDMA-Codes derart gewählt, dass die Differenz der jeweiligen Anzahlen der CDMA-Codes, die durch eine Kombination von Kanalmesssequenzen tseq, ein sogenanntes Codewort, abgebildet werden, maximal ist. Es ist ferner vorteilhaft, wenn die Differenz der jeweiligen Anzahlen von CDMA-Codes bei allen Codewörtern möglichst gleich ist.

Ein derartiges Zuordnungsschema kann beispielsweise folgendermaßen aussehen:
Anzahl der Kanalmesssequenzen tseq: 3
Anzahl der Codeworte: 7
Anzahl CDMA-Codes: 16

| **Codewort** | **Codewort (binär)** | | | **Anzahl aktiver Codes** |
|---|---|---|---|---|
| | **tseq 1** | **tseq 2** | **tseq 3** | |
| 1 | | | X | 1 oder 8 oder 15 |
| 2 | | X | | 2 oder 9 oder 16 |
| 3 | | X | X | 3 oder 10 |
| 4 | X | | | 4 oder 11 |
| 5 | X | | X | 5 oder 12 |
| 6 | X | X | | 6 oder 13 |
| 7 | X | X | X | 7 oder 14 |

In diesem ausgewählten Fall beträgt die Differenz der Anzahl der CDMA-Codes für alle Codewörter konstant 7. Je nach Anzahl der verwendeten Kanalmesssequenzen tseq und der Anzahl der verwendeten CDMA-Codes können jedoch auch andere Zuordnungen als die obenstehende gewählt werden. Insbesondere können auch anstelle des hier gewählten binären Codes beliebige redundante Codes eingesetzt werden.

Eine Zuordnung, wie in obenstehender Tabelle abgebildet, ist erfindungsgemäß nicht auf die Darstellung aktiver CDMA-Codes beschränkt, sondern kann für beliebige teilnehmerspezifische Informationen, wie z.B. Informationen zur Leistungsregelung oder zur Teilnehmeridentifikation eingesetzt werden.

## Patentansprüche

1. Verfahren zur Signalisierung in einem Funk-Kommunikationssystem, wobei das Funk-Kommunikationssystem ein CDMA-Teilnehmer-Separierungsverfahren unterstützt,
**dadurch gekennzeichnet,**
**dass** von einer Sendestation (NB) des Funk-Kommunikationssystems teilnehmerspezifische Informationen kodiert durch eine Auswahl und/oder Anzahl von Kanalmeßsequenzen (tseq) zu einer Empfangsstation (UE) signalisiert werden.

2. Verfahren nach Anspruch 1,
**dadurch gekennzeichnet,**
**dass** von einer Basisstation (NB) des Funk-Kommunikationssystems teilnehmerspezifische Informationen codiert durch eine Auswahl und/oder Anzahl von Kanalmeßsequenzen (tseq) zu einer Teilnehmerstation (UE) signalisiert werden.

3. Verfahren nach einem vorhergehenden Anspruch,
**dadurch gekennzeichnet,**
**dass** von einer Basisstation (NB) des Funk-Kommunikationssystems eine aktuelle Anzahl (n) der in einer Funkzelle (Z) der Basisstation (NB) zugeteilten Spreizcodes (c) kodiert durch eine Auswahl und/oder Anzahl von Kanalmeßsequenzen (tseq) zu einer Teilnehmerstation (UE) signalisiert werden.

4. Verfahren nach einem vorhergehenden Anspruch,
**dadurch gekennzeichnet,**
**dass** die Basisstation (NB) des Funk-Kommunikationssystems eine Teilnehmeridentifikation kodiert durch eine Auswahl und/oder Anzahl von Kanalmeßsequenzen (tseq) zu einer Teilnehmerstation signalisiert wird.

5. Verfahren nach einem vorhergehenden Anspruch,
**dadurch gekennzeichnet,**
**dass** von der Basisstation (NB) des Funk-Kommunikationssystems eine Schrittweite (ΔP) einer Sendeleistungsänderung der Teilnehmerstation (UE) kodiert durch die Auswahl und/oder Anzahl von Kanalmeßsequenzen (tseq) zu der Teilnehmerstation (UE) signalisiert wird.

6. Verfahren nach einem vorhergehenden Anspruch,
**dadurch gekennzeichnet,**
**dass** die teilnehmerspezifischen Informationen verschiedene Werte aufweisen können und dass jeweils einer Auswahl und/oder Anzahl von Kanalmeßsequenzen (tseq) ein oder mehrere Werte der teilnehmerspezifischen Informationen zugeordnet und zu der Teilnehmerstation (UE) signalisiert werden.

7. Verfahren nach Anspruch 6,
**dadurch gekennzeichnet**
**dass** eine Differenz der Werte der zugeordneten teilnehmerspezifischen Informationen maximal und/oder konstant ist.

8. Verfahren nach Anspruch 6 oder 7,
**dadurch gekennzeichnet,**
**dass** ein oder mehrere Werte der Anzahl der in einer Funkzelle (Z) der Basisstation (NB) zugeteilten Spreizcodes (c) der Auswahl und/oder Anzahl von Kanalmeßsequenzen (tseq) zugeordnet und zu der Teilnehmerstation (UE) signalisiert werden.

9. Verfahren nach einem vorhergehenden Anspruch,
**dadurch gekennzeichnet,**
**dass** zur Codierung durch die Auswahl und/oder Anzahl von Kanalmeßsequenzen (tseq) Kanalcodierungsverfahren eingesetzt werden.

10. Verfahren nach einem vorhergehenden Anspruch,
**dadurch gekennzeichnet, daß**
die Kodierung der Anzahl (n) zugeteilter Spreizkodes (c) mittels eines oder mehrerer Kanalmeßsequenzen (tseq) entsprechend einer binären Kodierung durchgeführt wird.

11. Basisstation (NB) eines CDMA-Funk-Kommunikationssystems. mit Mitteln zum Signalisieren von teilnehmerspezifischen Informationen zu einer Teilnehmerstation (UE) mittels einer Kodierung durch eine Auswahl und/oder Anzahl von Kanalmeßsequenzen (tseq).

12. Basisstation nach Anspruch 11, wobei das Funk-Kommunikationssystem als ein Mobilfunksystem oder als ein drahtloses Teilnehmeranschlußsystem verwirklicht ist.

## Claims

1. Method for signalling in a radio communications system, the radio communications system supporting a CDMA subscriber separation method, **characterized in that** subscriber-specific information is signalled, coded by a selection and/or number of channel measuring sequences (tseq), from a transmitter station (NB) of the radio communications system to a receiver station (UE).

2. Method according to Claim 1, **characterized in that** subscriber-specific information is signalled, coded by a selection and/or number of channel measuring sequences (tseq), from a base station (NB) of the radio communications system to a subscriber station (UE).

3. Method according to a preceding claim, **characterized in that** a current number (n) of the spread codes (c) allocated to a radio cell (Z) of the base station (NB) are signalled, coded by a selection and/or number of channel measuring sequences (tseq), from a base station (NB) of the radio communications system to a subscriber station (UE).

4. Method according to a preceding claim, **characterized in that** a subscriber identification is signalled, coded by a selection and/or number of channel measuring sequences (tseq), the base station (NB) of the radio communications system to a subscriber station.

5. Method according to a preceding claim, **characterized in that** an increment (ΔP) of a change in the transmit power of the subscriber station (UE) is signalled, coded by the selection and/or number of channel measuring sequences (tseq), from the base station (NB) of the radio communications system to the subscriber station (UE).

6. Method according to a preceding claim, **characterized in that** the subscriber-specific information can have various values, and **in that** one or more values of the subscriber-specific information is assigned in each case to a selection and/or number of channel measuring sequences (tseq) and signalled to the subscriber station (UE).

7. Method according to Claim 6, **characterized in that** a difference between the values of the assigned subscriber-specific information is at a maximum and/or is constant.

8. Method according to Claim 6 or 7, **characterized in that** one or more values of the number of the spread codes (c) allocated to a radio cell (Z) of the base station (NB) is assigned to the selection and/or number of channel measuring sequences (tseq) and are signalled to the subscriber station (UE).

9. Method according to a preceding claim, **characterized in that** channel coding methods are used for coding by the selection and/or number of channel measuring sequences (tseq).

10. Method according to a preceding claim, **characterized in that** the coding of the number (n) of allocated spread codes (c) is carried out by means of one or more channel measuring sequences (tseq) in accordance with binary coding.

11. Base station (NB) of a CDMA radio communications system, having means for signalling subscriber-specific information to a subscriber station (UE) by means of coding by a selection and/or number of channel measuring sequences (tseq).

12. Base station according to Claim 11, the radio communications system being implemented as a mobile radio system or as a wire-free subscriber line system.

## Revendications

1. Procédé de signalisation dans un système de radiocommunication, le système de radiocommunication supportant un procédé de séparation d'abonnés CDMA,
**caractérisé en ce**
**que** des informations spécifiques aux abonnés, codées par une sélection et/ou un nombre de séquences de mesure de canal (tseq), sont signalées à une station réceptrice (UE) par une station émettrice (NB) du système de radiocommunication.

2. Procédé selon la revendication 1,
**caractérisé en ce**
**que** des informations spécifiques aux abonnés, codées par une sélection et/ou un nombre de séquences de mesure de canal (tseq), sont signalées à une station d'abonné (UE) par une station de base (NB) du système de radiocommunication.

3. Procédé selon l'une des revendications précédentes,
**caractérisé en ce**
**qu'**un nombre actuel (n) des codes d'étalement (c) affectés dans une cellule (Z) de la station de base (NB), codés par une sélection et/ou un nombre de séquences de mesure de canal (tseq), est signalé à une station d'abonné (UE) par une station de base (NB) du système de radiocommunication.

4. Procédé selon l'une des revendications précédentes,
**caractérisé en ce**
**qu'**une identification d'abonné, codée par une sélection et/ou un nombre de séquences de mesure de canal (tseq), est signalée à une station d'abonné par la station de base (NB) du système de radiocommunication.

5. Procédé selon l'une des revendications précédentes,
**caractérisé en ce**
**qu'**un pas (ΔP) de modification de la puissance d'émission de la station d'abonné (UE), codé par la sélection et/ou le nombre de séquences de mesure de canal (tseq), est signalé à la station d'abonné (UE) par la station de base (NB) du système de radiocommunication.

6. Procédé selon l'une des revendications précédentes,
**caractérisé en ce**
**que** les informations spécifiques aux abonnés peuvent avoir différentes valeurs et en ce qu'une ou plusieurs valeur/s des informations spécifiques aux abonnés est/sont affectée/s à chaque fois à une sélection et/ou un nombre de séquences de mesure de canal (tseq) et est/sont signalée/s à la station d'abonné (UE).

7. Procédé selon la revendication 6,
**caractérisé en ce**
**qu'**une différence des valeurs des informations spécifiques aux abonnés qui sont affectées est maximale et/ou constante.

8. Procédé selon la revendication 6 ou 7,
**caractérisé en ce**
**qu'**une ou plusieurs valeur/s du nombre de codes d'étalement (c) affectés dans une cellule (Z) de la station de base (NB) est/sont affectée/s à la sélection et/ou au nombre de séquences de mesure de canal (tseq) et signalée/s à la station d'abonné (UE).

9. Procédé selon l'une des revendications précédentes,
**caractérisé en ce**
**que** l'on utilise un procédé de codage de canal pour procéder au codage par la sélection et/ou le nombre de séquences de mesure de canal (tseq).

10. Procédé selon l'une des revendications précédentes,
**caractérisé en ce**
**que** le codage du nombre (n) de codes d'étalement (c) affectés est exécuté au moyen d'une ou plusieurs séquence/s de mesure de canal (tseq) d'une manière correspondant à un codage binaire.

11. Station de base (NB) d'un système de radiocommunication CDMA, comprenant des moyens pour la signalisation d'informations spécifiques aux abonnés à une station d'abonné (UE) au moyen d'un codage réalisé par une sélection et/ou un nombre de séquences de mesure de canal (tseq).

12. Station de base selon la revendication 11, le système de radiocommunication étant réalisé en tant que système de téléphonie mobile ou en tant que système de lignes d'abonnés sans fil.
